Europäisches Patentamt

European Patent Office

Office européen des brevets

(19)

(11) Numéro de publication : **0 219 379**
**B1**

(12) **FASCICULE DE BREVET EUROPÉEN**

(45) Date de publication du fascicule du brevet :
28.03.90

(51) Int. Cl.$^5$ : **B 29 C 51/02**, B 29 C 51/20

(21) Numéro de dépôt : 86401947.6

(22) Date de dépôt : 05.09.86

(54) Procédé et dispositif pour le thermoformage de pièces en matière synthétique.

(30) Priorité : 11.09.85 FR 8513483

(43) Date de publication de la demande :
22.04.87 Bulletin 87/17

(45) Mention de la délivrance du brevet :
28.03.90 Bulletin 90/13

(84) Etats contractants désignés :
AT BE CH DE GB IT LI LU NL SE

(56) Documents cités :
FR--A-- 1 436 900
FR--A-- 1 470 587
FR--A-- 1 549 532
GB--A-- 1 194 821
US--A-- 3 562 859
US--A-- 3 733 160

(73) Titulaire : Queirel, Joel
La Vendue Mignot
F-10800 St. Julien les Villas (Aube) (FR)

(72) Inventeur : Queirel, Joel
La Vendue Mignot
F-10800 St. Julien les Villas (Aube) (FR)

(74) Mandataire : Rataboul, Michel
Cabinet Michel Rataboul 69, rue de Richelieu
F-75002 Paris (FR)

Jouve, 18, rue St-Denis, 75001 Paris, France

## Description

La présente invention concerne un procédé et un dispositif pour l'obtention de pièces thermoformées.

On connaît déjà le procédé d'obtention de petites pièces en matière synthétique qui consiste à extruder une bande mince et à la stocker en bobines puis à placer ces bobines une par une à l'entrée d'une machine de thermoformage à moule fixe.

Afin de concilier l'avance continue de la bande et l'arrêt de la feuille au droit du moule lors de l'opération de thermoformage, on prévoit la création d'une boucle de la feuille qui donne du mou. Lors de l'opération de thermoformage, la bande est arrêtée en aval de la boucle tandis que la matière continue d'arriver en amont, ce qui a pour conséquence un allongement de la boucle. Lorsque l'opération de thermoformage est terminée la bande reprend son avance en aval de la boucle et raccourcit celle-ci et ainsi de suite, pas à pas.

Etant donné la présence obligatoire d'une boucle, ce procédé n'est applicable que si la feuille extrudée est très mince comme cela doit être le cas, par exemple, pour obtenir des pots de yaourts, des gobelets etc.

Dans la pratique, on rencontre d'autres occasions de fabriquer des objets par thermoformage bien qu'ils doivent avoir une épaisseur beaucoup plus importante : coffrets, planches de bord d'automobiles, appareils sanitaires, etc.

Dans ce cas, on ne peut pas procéder au thermoformage en continu et l'on est obligé de passer par un stade intermédiaire qui consiste à fabriquer des plaques à partir de granulés de matière synthétique, ces plaques étant ensuite amenées individuellement à un moule de thermoformage.

Il en résulte une suite d'opérations de chauffage et de refroidissement puisque les granulés sont d'abord fondus pour l'obtention des plaques, puis celles-ci sont refroidies pour leur stockage et leur transport, à la suite de quoi les plaques doivent être réchauffées pour être amenées à la température correcte de thermoformage et, enfin, après thermoformage l'objet est à nouveau refroidi. Aux chocs thermiques successifs qui résultent de ces opérations, s'ajoutent les nécessités de stockage et de transport des plaques, le tout occasionnant des frais et affectant la qualité des produits obtenus.

On a déjà essayé de réaliser le thermoformage tout de suite après l'extrusion d'une bande, sans constituer de produit intermédiaire : bobines ou plaques.

C'est ainsi que l'on connaît :

— Le brevet FR-A-1436-900 qui décrit une machine de thermoformage verticale munie de moyens de guidage d'une feuille extrudée. Cette feuille est entraînée par des rouleaux, à la partie supérieure et la partie inférieure de la machine mais non par les marges et tout le long de la feuille. Le thermoformage est effectué au moyen de moules se déplaçant à la même vitesse que la bande, les moules étant ramenées après thermoformage dans leur position d'origine. Cependant le thermoformage intervient quand la feuille est encore chaude, aucun moyen de contrôle de la température de la feuille n'étant prévu, ni pour créer une zone froide, ni pour réchauffer ensuite la matière, ni bien entendu, pour la maintenir latéralement lors d'un réchauffage.

— Le brevet FR-A-1549-532 qui concerne une machine de thermoformage pour une feuille extrudée entraînée par des rouleaux en amont et en aval d'un poste de thermoformage mais non par ses marges et sur toute la longueur de la machine. La matière délivrée à température constante, est déformée en S à la sortie de l'extrudeuse (et n'est pas laissée horizontale), par des rouleaux qui sont destinés à la refroidir pour lui donner la température de thermoformage. Il n'est prévu ici, ni calandrage, ni création d'une zone froide ni réchauffage.

— Le brevet US-A-3562-859 dans lequel est décrite une machine de thermoformage agissant par cycles successifs et non en continu. Une feuille est placée au-dessous d'un poste de chauffage fixe. Quand la feuille a la température voulue, un moule est actionné contre la feuille, vers les organes chauffants, moule qui reste fixe pendant l'opération de moulage. Quand cette opération est terminée, le moule est tracté et entraîne la feuille formée au-dessous d'un poste de refroidissement fixe. Le moule est alors ramené sous le poste de chauffage et ainsi de suite.

Cette machine ne prévoit ni extrusion combinée, ni calandrage, ni évidemment de zone froide entre la tête d'extrusion et un poste de réchauffage mobile avec le moule, ni enfin de moulage en déplacement linéaire avec la feuille elle-même en mouvement uniforme permanent.

A noter que pour être efficace, le poste de chauffage doit agir très près de la feuille et qu'en conséquence, le moulage de bas en haut ne peut se faire que sur une très faible distance, pour créer des petits objets, de relief modeste.

La présente invention a pour but de réaliser un procédé et un dispositif de thermoformage en continu, sans création de produits intermédiaires à partir d'une feuille extrudée dont on conserve la bonne tenue mécanique en ne réchauffant que la partie de la feuille qui va être thermorformée.

A cette fin, l'invention a pour objet un procédé pour l'obtention de pièces thermoformées, dans lequel on extrude à chaud une matière synthétique en bande horizontale ; on calandre cette bande et on la tracte horizontalement selon un mouvement continu permanent par ses zones marginales dès l'amont d'un poste de thermoformage, on laisse refroidir naturellement la bande par absence de chauffage immédiatement après calandrage, sur une fraction de sa longueur, puis on la réchauffe jusqu'à la température de thermoformage sur une fraction de sa longueur sensiblement égale à celle qui est nécessaire au thermoformage afin qu'il subsiste une autre fraction moins chaude entre l'endroit du calandrage et la fraction réchauffée ; on place la fraction réchauffée en regard d'un moule, le moule et les moyens de réchauffage de la bande étant déplaçables simultanément, les moyens de réchauffage étant disposés en amont dudit moule ; on déplace ce moule à la même vitesse et dans le même sens que la bande ; et on procède simultanément au thermoformage de la bande et à son découpage en une partie constituant une pièce moulée et une partie subsistante ou « voile » comprenant les zones marginales.

Selon une autre caractéristique de ce procédé le voile subsistant après l'opération de thermoformage est fractionné puis broyé et le granulat résultant est conduit pour recyclage à une extrudeuse 1 à partir de laquelle commence le cycle d'obtention de la bande, ce granulat étant de préférence mélangé à un autre granulat non recyclé, ainsi que cela est connu en soi.

L'invention a également pour objet un dispositif pour la mise en œuvre du procédé selon la revendication 1, du type comportant une boudineuse, une tête d'extrusion, une calandre et des longerons horizontaux sur lesquels sont prévus d'une part des moyens de mise en mouvement continu d'organes d'entraînement horizontal en amont d'un poste de thermoformage pour les bords longitudinaux d'une bande en matière thermoformable issue de la tête d'extrusion et de la calandre et, d'autre part, des moyens de guidage et de mise en mouvement horizontal aller et retour d'un équipage mobile comprenant d'une part un moule de thermoformage et une contrepartie situés respectivement au-dessous et au-dessus de l'emplacement de la bande thermoformable, l'équipage mobile comprenant en outre des moyens de réchauffage de la bande thermoformable situés du côté dudit équipage mobile le plus proche de la calandre, des moyens étant prévus d'une part pour découper la bande en une partie thermoformée et une partie subsistante ou « voile » devant demeurer en prise avec les organes d'entraînement et d'autre part pour évacuer d'abord la partie thermoformée puis ensuite le voile séparé des organes d'entraînement.

Selon d'autres caractéristiques de ce dispositif :

— les moyens de réchauffage comprennent un bâti et des éléments chauffants dont la position est ajustable par rapport au bâti afin qu'ils puissent être situés individuellement à des endroits différents selon les caractéristiques de la bande et/ou de la partie à thermoformer ;

— l'équipage mobile comprend un caisson inférieur qui est monté mobile verticalement et qui est associé à une table élévatrice elle-même mobile verticalement par rapport au caisson, un moule amovible devant être assujetti à ladite table élévatrice ;

— le caisson présente une ouverture latérale qui, lorsqu'elle est dégagée, donne accès au moule ;

— les moyens de mise en mouvement continu des organes d'entraînement de la bande sont constitués par au moins une chaîne fermée sur elle-même en boucle et en prise avec un moteur, des moyens d'accouplement étant prévus pour relier cinématiquement cette chaîne et l'équipage mobile quand ce dernier doit être mis en mouvement aller tandis que ces moyens sont neutralisés quand l'équipage mobile doit être mis en mouvement retour ;

— les moyens d'accouplement comprennent d'une part une seconde chaîne fermée sur elle-même en boucle et en prise avec un pignon solidaire d'un autre pignon en prise avec la chaîne de mise en mouvement continu des organes d'entraînement et, d'autre part, une platine solidaire de l'équipage mobile et munie de pignons en prise avec ladite seconde chaîne, l'un de ces pignons étant relié cinématiquement à un moteur susceptible d'être soit bloqué, auquel cas la seconde chaîne doit entraîner la platine et l'équipage mobile dans le même sens et à la même vitesse que la chaîne de mise en mouvement continu des organes d'entraînement de la bande, soit mis en mouvement dans un sens et à une vitesse tels que le pignon doit entraîner la platine et l'équipage mobile à contre-sens de la seconde chaîne.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique longitudinale avec coupe partielle montrant un dispositif conforme à l'invention.

La figure 2 est une vue schématique en plan d'un dispositif conforme à l'invention.

Les figures 3 et 4 sont deux vues schématiques partielles montrant les deux positions extrêmes d'un équipage mobile portant un moule fonctionnant selon le procédé conforme à l'invention et un poste de réchauffage.

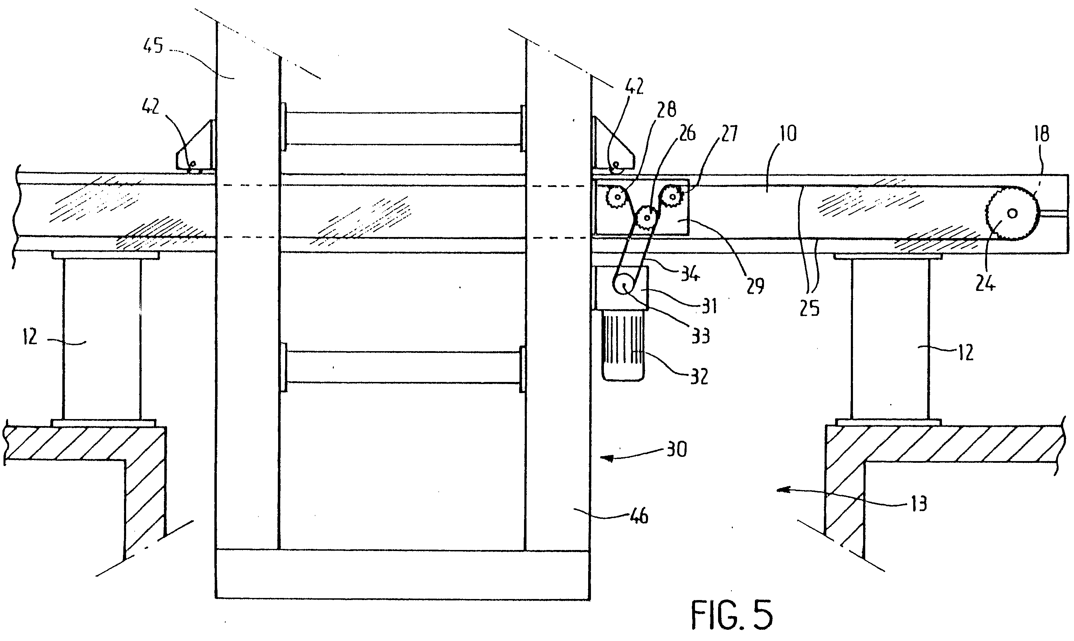

La figure 5 est une vue schématique partielle montrant un mode de réalisation de l'invention permettant d'assurer le déplacement aller et retour de l'équipage mobile en coordination avec le déplacement de la bande à thermoformer.

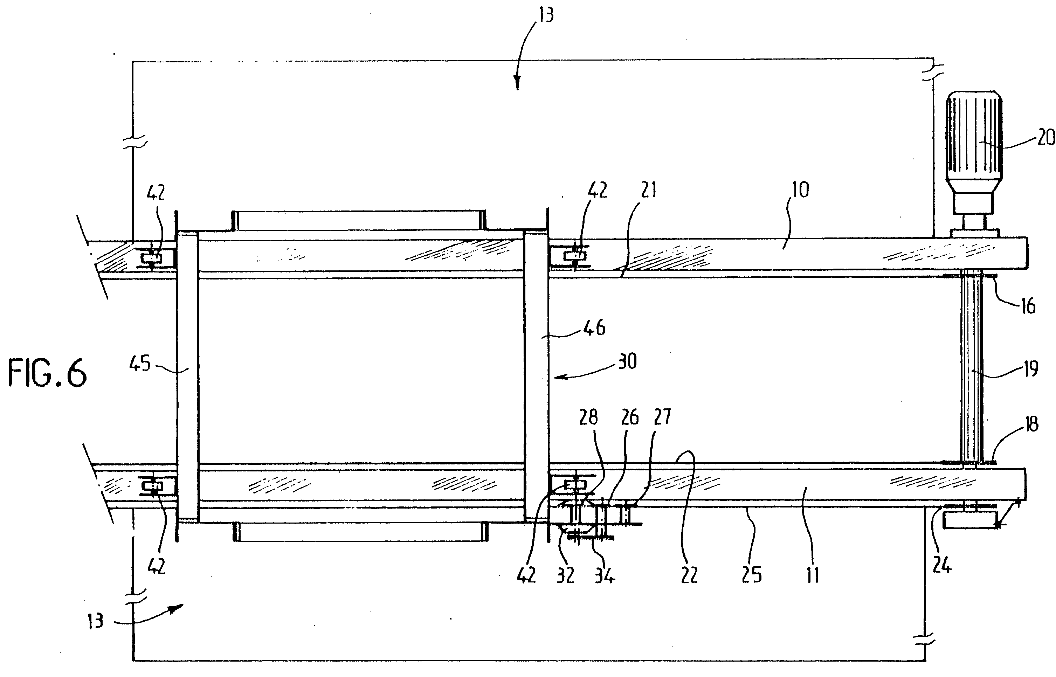

La figure 6 est une vue schématique partielle en plan illustrant ce même mode de réalisation.

En se reportant au dessin, on voit qu'une installation conforme à l'invention comporte une boudineuse 1 dont la trémie 2 reçoit par une goulotte de distribution 3 des granulés placés dans un réservoir de distribution 4.

La boudineuse 1 est de tout type connu et il n'est donc pas nécessaire de la décrire en détail. Elle est associée à une tête d'extrusion 5 dont l'orifice a la largeur et la hauteur correspondant à la largeur et l'épaisseur de la bande à extruder 6.

Immédiatement en aval de la tête d'extrusion 5, se trouve une calandre 7, également de tout type connu, destinée à donner à la bande 6 une épaisseur précise et une bonne tenue mécanique.

A cet égard, il faut souligner que l'on n'a représenté au dessin que deux cylindres chauffants 8 et 9 alors que dans la pratique il vaut mieux disposer d'une calandre à trois cylindres.

Les calandres à trois cylindres de type connu sont destinées à créer une bande dans laquelle des plaques sont découpées avant stockage et expédition de sorte qu'en aval de la calandre la bande extrudée doit être à une température relativement basse. On expliquera plus loin en détail pourquoi le procédé conforme à l'invention prévoit des températures substantiellement différentes du fait qu'il n'est pas nécessaire de refroidir autant.

La bande extrudée doit se trouver à une température, en sortie de calandre, nettement supérieure à celle des installations connues, ce qui lui donne la faculté d'être ensuite réchauffée à la température de thermoformage plus facilement, sans pour autant perdre sa tenue mécanique grâce à la présence d'une zone « froide » entre la sortie de calandre et le poste de réchauffage.

Au delà de la calandre 7, se trouvent des longerons parallèles 10 et 11 reposant sur des appuis 12 situés de part et d'autre d'une fosse 13 que les longerons 10 et 11 enjambent.

Au voisinage de leurs extrémités en regard, les longerons 10 et 11 comportent des pignons 15, 16, 17, 18.

Les pignons 16 et 18 sont accouplés par un essieu 19 et le pignon 16 est relié à un moteur de commande 20.

Sur les pignons 15 et 16 d'une part et sur les pignons 17 et 18 d'autre part sont engagées deux chaînes à picots 21 et 22, les picôts, non visibles sur le dessin, étant destinés à pénétrer dans la matière constitutive de la bande 6 près de ses bords longitudinaux, dès qu'elle atteint les longerons 10 et 11, c'est-à-dire dès l'aval de la calandre 7 et en amont de l'endroit où la bande 6 doit être thermoformée. Les picots servent à entraîner la bande 6 horizontalement par traction le long des longerons 10 et 11 depuis sa sortie de la calandre 7 et aussi à la retenir transversalement car lors de son réchauffage elle tend à s'affaisser et donc à exercer un effort latéral.

A l'extérieur du longeron 11 se trouvent deux pignons 23 et 24 alignés avec les pignons 17 et 18 et reliés à ceux-ci pour être entraînés dans le même sens et à la même vitesse.

Pour des raisons de sécurité, on peut prévoir un embrayage fonctionnant par tout ou rien entre le pignon 24 et le pignon 18 afin que le pignon 24 puisse être rapidement désaccouplé et immobilisé bien que le pignon 18 continue d'être entraîné par l'essieu 19 et le moteur 20.

Sur les pignons 23 et 24 est engagée une chaîne 25 qui engrène avec un pignon 26 au moyen de deux pignons de renvoi 27 et 28, ces trois derniers pignons étant montés sur une platine 29 solidaire d'un équipage mobile 30 qui porte également un support 31 pour un moteur 32 entraînant un pignon de commande 33 avec lequel le pignon 26 est accouplé au moyen d'une chaîne ou d'une courroie 34.

Avec ce montage, on comprend d'ores et déjà que la chaîne 25 est entraînée dans le même sens et à la même vitesse que les chaînes à picots 21 et 22 et que le moteur 32 étant supposé bloqué, la chaîne 25 entraîne avec elle la platine 29 puisque les pignons 26, 27, 28 et 33 ne peuvent pas tourner.

La platine 29 étant solidaire de l'équipage mobile 30, celui-ci est donc entraîné dans le même sens et à la même vitesse que les chaînes à picots 21 et 22.

Si au contraire on met en route le moteur 32 dans le sens inverse de celui dans lequel est entraîné le brin supérieur de la chaîne 25, l'équipage 30 peut être immobilisé ou entraîné dans un sens ou dans l'autre selon la vitesse du moteur 32 et de la chaîne 25.

En l'occurrence, comme il s'agit de ramener l'équipage 30 à sa position de départ lorsqu'il a été entraîné sur une distance prédéterminée voulue à la même vitesse est dans le sens que les brins supérieurs des chaînes 21 et 22, on établit la vitesse du moteur 32 de telle manière qu'elle soit supérieure à celle de la chaîne 25 afin que l'ensemble platine 29 — équipage mobile 30 — suppport 31 soit déplacé dans le sens inverse de celui dans lequel la bande 6 est entraînée par les chaînes à picots 21 et 22.

L'équipage mobile 30 peut être guidé dans son mouvement horizontal alernatif soit par des ensembles à galets 40 coopérant avec des guides horizontaux 41, soit par des galets 42 roulant sur les longerons 10 et 11 eux-mêmes.

L'équipage mobile 30 comprend des montants latéraux 45 et 46 qui s'étendent à l'extérieur des longerons 10 et 11 afin que la bande extrudée 6 puisse passer à travers l'équipage mobile 30.

Celui-ci comprend deux ensembles situés respectivement au-dessus et au-dessous du plan dans lequel doit s'étendre la bande 6.

La partie supérieure comporte des serre-flancs 47 du type connu en soi et montés mobiles par rapport à l'équipage mobile 30 au moyen de vérins 48.

La partie inférieure de l'équipage mobile 30 comprend un caisson 50 dans lequel se trouve une table élévatrice 51 portant une embase 52 pour un moule 53 de la forme voulue pour thermoformer la bande 6.

Le caisson 50 peut-être élevé et abaissé grâce à des vérins 55 et cela indépendamment de la table élévatrice 51, elle-même mobile verticalement au moyen de croisillons 56 attelés à un ou plusieurs vérins 57.

Avec ces dispositions, le caisson 50 peut être élevé vers le plan horizontal dans lequel s'étend la bande 6 en fonction des formes du moule qui peut être, ainsi que cela est connu en soi, en positif, en négatif ou mixte c'est-à-dire présenter des convexités au-dessus du plan de la bande 6 seulement ou des concavités au-dessous de ce même plan ou à la fois des convexités et des concavités de part et d'autre de ce plan.

Il faut, en outre, prévoir le cas où la bande 6 pourrait avoir une flèche du fait de son poids et de la distance qui sépare les deux chaînes à picots 21 et 22. Afin d'éviter des tensions excessives, il est bon de donner aux chaînes 21 et 22 une latitude de déplacement latéral.

Ainsi, dans tous les cas, la bande 6 peut se déplacer librement.

Sur le côté de l'équipage mobile 30 le plus proche de la calandre 7, se trouve un ensemble chauffant qui comprend un bâti 60 maintenu par des tirants 61 et servant de support à des éléments chauffants 62 assujettis de manière amovible au bâti 60 afin de pouvoir ajuster leur position.

Les éléments chauffants 62 intéressent une étendue de la bande 6 située en amont du poste de thermoformage et correspondant à ce qui est nécessaire au thermoformage. En outre, selon les formes du moule 53 et/ou selon les caractéristiques de la bande 6, on peut disposer différemment les éléments chauffants 62 pour qu'ils chauffent plus ou moins certaines zones en vue de faciliter la déformation de la bande 6 lors du thermoformage.

Pour la même raison, les éléments chauffants 62 sont réglables individuellement pour qu'ils radient plus ou moins de chaleur. On peut ainsi, par exemple, réchauffer la bande 6 plus intensément dans sa partie proche de l'équipage 30 que dans sa partie éloignée, celle-ci étant plus chaude que la première car plus proche de la calandre 7 et a donc eu moins de temps pour se refroidir.

De l'autre côté de la fosse 13, par rapport à la calandre 7, se trouve une machine 65 destinée à couper et fractionner la bande 6 qui subsiste après thermoformage et retrait des pièces moulées.

La machine 65 peut être du type cisaille ou déchiqueteuse et crée des fragments relativement gros qui sont évacués par un plan incliné 66 et tombent sur un transporteur élévateur 67 aboutissant au-dessus d'une goulotte 68 d'un broyeur 69.

Le broyeur 69 débite dans un ou plusieurs réservoirs, que l'on n'a pas représenté ici afin de simplifier l'exposé, et l'on a fait figurer exclusivement un conduit 70 aboutissant à un réservoir tampon 71 muni d'une goulotte 72 débouchant au-dessus de la trémie de chargement 2 de la boudineuse 1.

Le fonctionnement du dispositif qui vient d'être décrit est le suivant : à la sortie de la calandre 7, la bande extrudée 6 est maintenue à une température plus élevée que ce qui est pratiqué actuellement et qui doit être optimum entre les nécessités de tenue mécanique qui imposent une température relativement basse et le souci d'économiser les dépenses d'énergie des éléments chauffants 62 nécessaires à la remontée en température de la bande 6 au moment de son thermoformage.

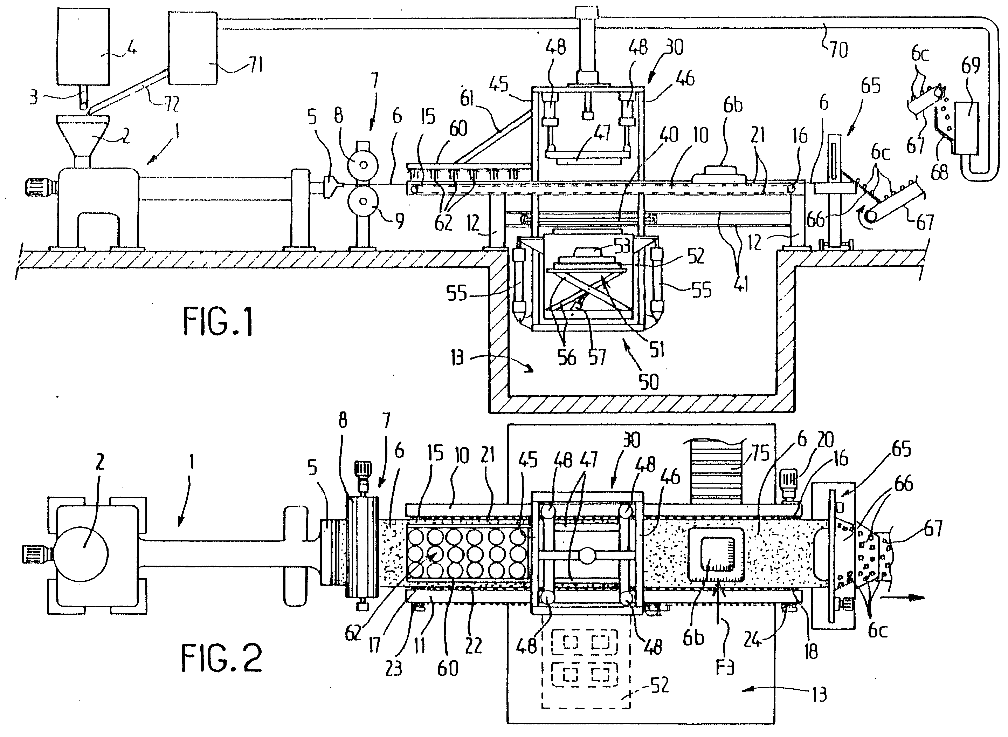

Dans la position de la figure 1, l'équipage mobile 30 se trouve dans la position extrême amont c'est-à-dire le plus près possible de la calandre 7 et la bande 6 qui a été réchauffée par les éléments 62 est tractée par les picots des chaînes 21 et 22 pour que sa partie la plus chaude soit située à l'aplomb du moule 53. Celui-ci est en position basse c'est-à-dire que la table élévatrice 51 est abaissée ainsi que le caisson 50.

Au dessus de la bande 6, les serre-flancs 47 sont en position haute, les vérins 48 étant en position de rétraction.

Au moment d'effectuer l'opération de thermoformage, le moteur 32 est bloqué, de sorte que l'équipage mobile 30 est entraîné exactement à la même vitesse que la bande 6 puisque l'origine du déplacement est le moteur 20 qui entraîne d'une part les chaînes à picots 21 et 22 et d'autre part la chaîne 25 dont l'équipage mobile 30 est rendu solidaire par le moteur 32 comme expliqué plus haut.

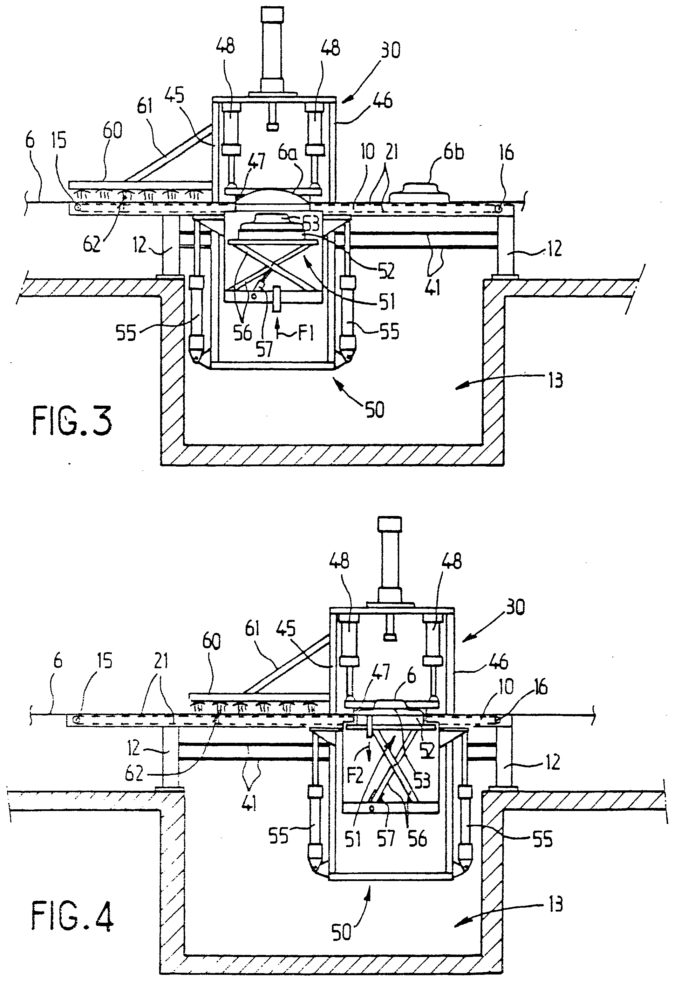

Dès que l'entraînement de l'équipage mobile 30 est obtenu, un ensemble de commande de tout type connu provoque la descente des serre-flancs 47 et la montée du caisson 50 jusqu'à ce que la bande 6 soit serrée et emprisonnée tout autour de la zone de thermoformage, ainsi que cela est représenté sur la figure 3.

Comme cela est connu en soi, on provoque une entrée d'air selon la flèche F1 à l'intérieur du caisson 50 pour provoquer une sur-pression sous la bande 6, ce qui déforme celle-ci en forme de dôme 6a, opération connue dans la pratique sous le nom de « bullage ».

Cette pré-déformation de la bande 6 lui donne une bonne aptitude à une déformation plus précise et plus marquée et évite les contraintes dues, notamment, aux arêtes plus ou moins vives que doit présenter le moule 53.

La centrale de commande provoque alors automatiquement la montée de la table élévatrice 51, et donc la montée du moule 53, ainsi que cela est représenté sur la figure 4.

L'opération de thermoformage proprement dite est alors exécutée et l'on applique une dépression selon la flèche F2 pour que la bande 6 s'applique fidèlement contre la forme du moule 53. Naturellement, ainsi que cela est bien connu en soi, on peut prévoir non une dépression pour « aspirer » la matière à former mais une pression pour la « souffler ».

La mise en forme de la matière constitutive de la bande 6 est en soi une opération connue qui ne sera pas décrite ici plus en détail.

On note que pendant cette opération de thermoformage, la bande 6 et l'équipage mobile 30 se sont déplacés en parfait synchronisme et, en fin de cycle, l'équipage 30 se trouve près de l'extrémité aval de la fosse 13.

En même temps que l'on a provoqué le thermoformage de la bande 6, on a découpé celle-ci autour de la partie à thermoformé afin qu'il subsiste dans la bande 6 un voile qui reste en prise avec les picots des chaînes 21 et 22 et qui continue donc son déplacement d'amont en aval c'est-à-dire vers la machine à découper 65.

Après thermoformage, les serre-flancs 47 sont remontés pendant que le moule 53 et le caisson 50 sont abaissés et la centrale de commande provoque en outre, en fin de cycle, la mise en route du moteur 32 dont la transmission 34 entraîne le pignon 26, lequel roule en quelque sorte sur la chaîne 25, à contre sens de celle-ci, cette chaîne 25 continuant son déplacement d'amont en aval tandis que l'équipage mobile 30 revient à sa position de départ amont, en début de cycle, comme cela est représenté sur les figures 1 et 2.

Lorsque l'équipage mobile 30 revient à sa position de départ, la pièce moulée 6b continue de se déplacer avec le voile de la bande 6 et l'on évacue cette pièce 6b par tous moyens connus.

Sur les figures 1 et 2 on a schématisé cette opération par une flèche F3 indiquant une poussée transversale au déplacement de la bande 6 vers un transporteur d'évacuation 75.

Le voile continue son déplacement vers la machine 65 qui le découpe transversalement et longitudinalement en fragments à peu près calibrés 6c qui tombent sur le transporteur 67, ces fragments tombant dans la trémie 68 du broyeur 69 où ils sont réduits en granules de dimensions voulues pour leur fonte correcte après transport par le conduit 70 jusqu'au réservoir 71.

Ces granules recyclés sont mélangés avec les granules de matière neuve du réservoir 4 en toutes proportions voulues pour que la trémie 2 de la boudineuse 1 reçoive un mélange correct pour la bonne constitution de la bande 6 extrudée par la tête 5.

Comme on y a fait allusion plus haut, il est bon de prévoir la température de la bande 6 en sortie de la calandre 7 de telle sorte que cette bande 6 soit à la fois assez solide pour supporter la traction continue des chaînes à picots 21 et 22 et suffisamment déformable pour que les pièces soient convenablement thermoformées.

En prévoyant aux environs de 100 degrés Celsius la température du cylindre de sortie de la calandre 7, on permet aux éléments chauffants 62 de remonter la température de la bande 6 à environ 150-190 degrés Celsius pendant le temps relativement court qui correspond au cycle aller de l'équipage mobile 30 c'est-à-dire pendant l'opération de thermoformage. La zone de la bande 6 comprise entre la calandre et le poste de réchauffage est la moins chaude : 100° Celsius environ et, grâce à cela, la bande 6 présente une bonne tenue mécanique, garantissant sa résistance à la traction qu'exerce ici les picots des chaînes pendant la course aller, les éléments chauffants 62 réchauffent la partie de la bande 6 qui va immédiatement après être thermoformée en aval. Comme on l'a évoqué sur la figure 2, le caisson 50 s'ouvre avantageusement sur l'un de ses côtés afin que l'on puisse avoir accès à l'intérieur et notamment au support de moule 52.

Grâce à cela, il est très facile de remplacer le moule 53 par un autre moule 53a d'une autre forme en quelques minutes sans arrêter l'installation et tout au plus en ralentissant le déplacement de la bande 6.

En effet, il est peu important de provoquer ainsi des chutes de matière de la bande 6, c'est-à-dire des longueurs non utilisées pour le thermoformage de pièces, car la matière étant recyclée, elle n'est pas entièrement perdue.

Il ressort de la description ci-dessus que le procédé conforme à l'invention permet le thermoformage de pièces tout de suite après la constitution d'une bande à partir de granules sans aucun choc thermique, sans fabrication de produits intermédiaires, sans stockage et sans transport, ce qui conduit à un abaissement des prix de revient et à une augmentation de la qualité.

L'invention s'applique particulièrement bien au thermoformage de pièces dans une bande épaisse : de plusieurs millimètres à plus d'un centimètre et large : deux mètres et plus. La maîtrise de l'importante masse de matière que représente une bande ayant les dimensions ci-dessus est obtenue par mise en œuvre de l'invention, alors que les moyens antérieurement connus n'étaient applicables qu'aux films minces pour l'obtention d'objets fins et petits.

On peut rendre réglable la partie de l'équipage mobile 30 opposée à celle qui porte l'ensemble chauffant et qui comprend les montants 46, les serre-flans 47 etc., ainsi que le caisson 50 afin de régler leur longueur et de l'ajuster aux dimensions des pièces à thermoformer.

## Revendications

1. Procédé pour l'obtention de pièces thermoformées, dans lequel on extrude à chaud une matière synthétique en bande horizontale (6) ; on calandre cette bande (6) et on la tracte horizontalement selon un mouvement continu permanent par ses zones marginales dès l'amont d'un poste de thermoformage ; on laisse refroidir naturellement la bande (6) par absence de chauffage immédiatement après calandrage, sur une fraction de sa longueur, puis on la réchauffe jusqu'à la température de thermoformage sur une fraction de sa longueur sensiblement égale à celle qui est nécessaire au thermoformage afin qu'il subsiste une autre fraction moins chaude entre l'endroit du calandrage (7) et la fraction réchauffée ; on place la fraction réchauffée en regard d'un moule (53), le moule et les moyens de réchauffage de la bande (6) étant déplaçables simultanément, lesdits moyens de réchauffage étant disposés en amont dudit moule (53) ; on déplace le moule (53) à la même vitesse et dans le même sens que la bande (6) ; on procède simultanément au thermoformage de la bande (6) et à son découpage en une partie constituant une pièce moulée (6b) et une partie subsistante ou « voile » comprenant les zones marginales.

2. Procédé selon la revendication 1, caractérisé en ce que le voile subsistant après l'opération de thermoformage est fractionné puis broyé et le granulat résultant est conduit pour recyclage à une extrudeuse (1) à partir de laquelle commence le cycle d'obtention de la bande (6), ce granulat étant de préférence mélangé à un autre granulat non recyclé.

3. Dispositif pour la mise en œuvre du procédé selon la revendication 1, du type comportant une boudineuse (1), une tête d'extrusion (5), une calandre (7) et des longerons horizontaux (10-11) sur lesquels sont prévus d'une part des moyens (21-22) de mise en mouvement continu d'organes d'entraînement horizontal en amont d'un poste de thermoformage (30) pour les bords longitudinaux d'une bande (6) en matière thermoformable issue de la tête d'extrusion (5) et de la calandre (7) et, d'autre part, des moyens de guidage (40-41-42) et de mise en mouvement horizontal (25 à 29-31 à 34) aller et retour d'un équipage mobile (30) comprenant d'une part un moule de thermoformage (53) et une contrepartie situés respectivement au-dessous et au-dessus de l'emplacement de la bande thermoformable (6). L'équipage mobile (30) comprenant en outre des moyens de réchauffage (60-62) de la bande thermoformable (6) situés du côté dudit équipage mobile (30) le plus proche de la calandre (7), des moyens étant prévus d'une part pour découper la bande (6) en une partie thermoformée et une partie subsistante ou « voile » devant demeurer en prise avec les organes d'entraînement et d'autre part pour évacuer d'abord la partie thermoformée (6b) puis ensuite le voile séparé des organes d'entraînement.

4. Dispositif selon la revendication 3, caractérisé en ce que les moyens de réchauffage comprennent un bâti (60) et des éléments chauffants (62) dont la position est ajustable par rapport au bâti (60) afin qu'ils puissent être situés individuellement à des endroits différents selon les caractéristiques de la bande (6) et/ou de la partie à thermoformer (6b).

5. Dispositif selon la revendication 3, caractérisé en ce que l'équipage mobile (30) comprend un caisson inférieur (50) qui est monté mobile verticalement et qui est associé à une table élévatrice (51) elle-même mobile verticalement par rapport au caisson (50), un moule amovible (53) devant être assujetti à ladite table élévatrice (51).

6. Dispositif selon la revendication 5, caractérisé en ce que le caisson (50) présente une ouverture latérale qui, lorsqu'elle est dégagée, donne accès au moule (53).

7. Dispositif selon la revendication 3, caractérisé en ce que les moyens de mise en mouvement continu des organes d'entraînement de la bande sont constitués par au moins une chaîne (21-22) fermée sur elle-même en boucle et en prise avec un moteur (20), des moyens d'accouplement (25 à 29 - 31 à 34) étant prévus pour relier cinématiquement cette chaîne (21-22) et l'équipage mobile (30) quand ce dernier doit être mis en mouvement aller tandis que ces moyens (25 à 29 - 31 à 34) sont neutralisés quand l'équipage mobile (30) doit être mis en mouvement retour.

8. Dispositif selon la revendication 7, caractérisé en ce que les moyens d'accouplement comprennent d'une part une seconde chaîne (25) fermée sur elle-même en boucle et en prise avec un pignon (24) solidaire d'un autre pignon (18) en prise avec la chaîne (22) de mise en mouvement continu des organes d'entraînement et, d'autre part, une platine (29) solidaire de l'équipage mobile (30) et munie de pignons (26-28) en prise avec ladite seconde chaîne (25), l'un de ces pignons (26) étant relié cinématiquement à un moteur (32) susceptible d'être soit bloqué, auquel cas la seconde chaîne (25) doit entraîner la platine (29) et l'équipage mobile dans le même sens et à la même vitesse que la chaîne (22) de mise en mouvement continu des organes d'entraînement de la bande (6), soit mis en mouvement dans un sens et à une vitesse tels que le pignon (26) doit entraîner la platine (29) et l'équipage mobile (30) à contre-sens de la seconde chaîne (25).

**Claims**

1. A method of producing thermoformed elements, in which a synthetic material is extruded hot in a horizontal strip (6), this strip (6) is calendered and is drawn horizontally in an uninterrupted continuous movement by its marginal regions from upstream of a thermoforming station, the strip (6) is allowed to cool naturally by the absence of heating immediately after calendering along a fraction of its length, then it is reheated to the thermoforming temperature along a fraction of its length substantially equal to that which is necessary for thermoforming so that another cooler fraction is present between the calendering position (7) and the reheated fraction ; the reheated fraction is placed in alignment with a mould (53), the mould and the means for reheating the strip (6) being displaceable simultaneously, the said reheating means being positioned upstream from the said mould (53) in the direction of displacement, the mould (53) is displaced at the same speed and in the same direction as the strip (6) ; and the thermoforming of the strip (6) and its cutting into a portion forming a moulded element (6b) and a residual part or « sheet » comprising the marginal areas are effected simultaneously.

2. A method according to claim 1, characterised in that the sheet remaining after the heat-moulding operation is broken up and then crushed and the resulting granulate is fed for recycling purposes to an extruder (1) at which the cycle to produce the strip (6) is initiated, this granulate preferably being mixed with another, unrecycled granulate.

3. A device for putting into operation the method according to claim 1, of the type comprising an extruder (1), an extrusion head (5), a calender (7) and horizontal stringers (10-11) on which are provided on the one hand means (21-22) for imparting a continuous displacement to horizontal entrainment means upstream of a heat-moulding station (30) for the longitudinal edges of a strip (6) of heat-mouldable material emerging from the extrusion head (5) and from the calender (7) and, on the other hand, means for guiding (40-41-42), and for imparting a back and forth horizontal displacement (25 to 29 - 31 to 34) to, a movable apparatus (30) comprising on the one hand a thermoforming mould (53) and counter-element which are situated below and above, respectively, the location of the thermoplastic strip (6), the movable carriage (30) furthermore comprising means (60-62) for reheating the thermoformable strip (6) positioned on the side of the said movable apparatus (30) closer to the calender (7), means being provided on the one hand for cutting the web (6) into a thermoformed part and a residual part of « sheet » intended to remain in engagement with entraining elements and on the other hand for initially removing the thermoformed part (6b) and then the sheet separated from the driving elements.

4. A device according to claim 3, characterized in that the reheating means comprise a framework (60) and heating elements (62) the position of which is adjustable with respect to the framework (6) so that they can be positioned individually at different points as a function of the characteristics of the strip (6) and/or of the part (6b) to be thermoformed.

5. A device according to claim 3, characterized in that the movable apparatus (30) comprises a lower box (50) which is arranged to be vertically displaceable and which is associated with a lifting platform (51) itself movable vertically relative to the box (50), a removable mould (53) being intended to be fixed to the said lifting platform (51).

6. A device according to claim 5, characterized in that the box (50) has a lateral opening which, when it is uncovered, yields access to the mould (53).

7. A device according to claim 3, characterized in that the means for setting the strip entraining elements in continuous motion are constituted by at least one chain (21-22) closed on itself in a loop and in engagement with a motor (20), coupling means (25 to 29 - 31 to 34) being provided for coupling this chain (21-22) and the movable apparatus (30) in motion when this latter is to be placed in forward motion whereas these means (25 to 29 - 31 to 34) are neutralised when the movable carriage (3) is to be placed in return motion.

8. A device according to claim 7, characterized in that the coupling means comprise on the one hand a second chain (25) closed on itself in a loop and in engagement with a sprocket (24) integral with another sprocket (18) in engagement with the chain (22) for imparting a continuous motion to the driving elements, and on the other hand a plate (29) integral with the movable apparatus (30) and provided with sprockets (26-28) in engagement with the said second chain (25), one of these sprockets (26) being coupled for movement to a motor (32) which can either be stopped, in which case the second chain (25) will drive the plate (29) and the movable apparatus in the same direction and at the same speed as the chain (22), for imparting a continuous motion to the driving elements of the strip (6), or set in motion in a direction and at a speed such that the sprocket (26) will drive the side-plate (29) and the movable carriage (30) in the direction opposed to that of the second chain (25).

**Patentansprüche**

1. Verfahren zum Erhalten von thermogeformten Bauteilen, bei dem man einen Kunststoff zu einem horizontalen Band (6) warmextrudiert; man dieses Band (6) kalandriert und es horizontal gemäß einer kontinuierlichen Dauerbewegung an seinen Randzonen von stromauf eines Thermoformiergeräts zieht; man das Band (6) durch Abwesenheit von Erhitzung unmittelbar nach dem Kalandrieren auf einem Teil seiner Länge natürlich abkühlen läßt, es dann bis auf die Thermoformiertemperatur auf einem Teil seiner Länge, der im wesentlichen gleich dem für die Thermoformierung erforderlichen Teil ist, wiedererhitzt, damit ein anderer, weniger warmer Teil zwischen der Stelle der Kalandrierung (7) und dem wiedererhitzten Teil verbleibt; man den wiedererhitzten Teil einer Form (53) gegenüberstellt, wobei die Form und die Mittel zur Wiedererhitzung des Bandes (6) gleichzeitig verschiebbar sind, diese Wiedererhitzungsmittel stromauf dieser Form (53) angeordnet sind; man die Form (53) mit der gleichen Geschwindigkeit und in der gleichen Richtung wie das Band (6) verschiebt; man gleichzeitig die Thermoformierung des Bandes (6) und sein Zerschneiden in einen ein geformtes Bauteil (6b) darstellenden Teil und einen restlichen Teil oder « Schleier », der die Randzonen aufweist, vornimmt.

2. Verfahren nach dem Anspruch 1, dadurch gekennzeichnet, daß der nach dem Thermoformiervorgang verbleibende Schleier zerkleinert, danach feinzerkleinert wird und das erhaltene Granulat zwecks Wiederverwendung zu einem Extruder (1) gefördert wird, von dem aus der Zyklus zum Erhalten des Bandes (6) beginnt, wobei dieses Granulat vorzugsweise mit einem anderen, nicht rückgeführten Granulat vermischt wird

3. Vorrichtung zur Durchführung des Verfahrens nach dem Anspruch 1 der Art, die einen Extruder (1), einen Extrusionskopf (5), einen Kalander (7) und horizontale Längsträger (10-11) aufweist, auf denen einerseits Mittel (21-22) zur kontinuierlichen Bewegung von Horizontalantriebsorganen stromauf eines Thermoformiergeräts (30) für die Längsränder eines Bandes (6) aus thermoformierbaren Materials, das vom Extrusionskopf (5) und vom Kalander (7) kommt, und andererseits Führungsmittel (40-41-42) und Mittel (25 bis 29-31 bis 34) zur horizontalen Vorwärts- und Rückwärtsbewegung einer beweglichen Einrichtung (30) vorgesehen sind, die einerseits eine Thermoformierform (53) und ein Gegenhaltorgan, die unterhalb bzw. oberhalb der Lage des thermoformierbaren Bandes angeordnet sind, aufweist, wobei die bewegliche Einrichtung (30) andererseits Mittel (60-62) zur Wiedererhitzung des thermoformierbaren Bandes (6) aufweist, die auf der dem Kalander (7) nächsten Seite der beweglichen Einrichtung (30) angeordnet sind, wobei Mittel einerseits zum Zerschneiden des Bandes (6) in einen thermoformierten Teil und einen restlichen Teil oder « Schleier », der im Eingriff mit den Antriebsorganen bleiben muß, und andererseits zum Abführen zunächst des thermoformierten Teils (6b), dann anschließend des von den Antriebsorganen getrennten Schleiers vorgesehen sind.

4. Vorrichtung nach dem Anspruch 3, dadurch gekennzeichnet, daß die Wiedererhitzungsmittel ein Gerüst (60) und Heizelemente (62) aufweisen, deren Lage bezüglich des Gerüsts (60) justierbar ist, damit sie einzeln an verschiedenen Stellen je nach den Eigenschaften des Bandes (6) und/oder des zu thermoformierenden Teils (6b) positioniert werden können.

5. Vorrichtung nach dem Anspruch 3, dadurch gekennzeichnet, daß die bewegliche Einrichtung (30) einen unteren Kasten (50) aufweist, der vertikal beweglich montiert ist und der mit einem Hebetisch (51) verbunden ist, der selbst bezüglich des Kastens (50) vertikal beweglich ist, wobei eine abnehmbare Form (53) an dem Hebetisch (51) befestigt sein muß.

6. Vorrichtung nach dem Anspruch 5, dadurch gekennzeichnet, daß der Kasten (50) eine seitliche Öffnung aufweist, die, wenn sie freigemacht wird, Zugang zur Form (53) verschafft.

7. Vorrichtung nach dem Anspruch 3, dadurch gekennzeichnet, daß die Mittel zur kontinuierlichen Bewegung der Antriebsorgane des Bandes aus wenigstens einer Kette (21-22) bestehen, die in sich als Schleife geschlossen und im Eingriff mit einem Motor (20) ist, wobei Kupplungsmittel (25 bis 29 - 31 bis 34) vorgesehen sind, um kinematisch diese Kette (21-22) und die bewegliche Einrichtung (30) zu verbinden, wenn diese letztere in Vorwärtsbewegung versetzt werden muß, während diese Mittel (25 bis 29 - 31 bis 34) neutralisiert sind, wenn die bewegliche Einrichtung (30) in Rückwärtsbewegung versetzt werden muß.

8. Vorrichtung nach dem Anspruch 7, dadurch gekennzeichnet, daß die Kupplungsmittel einerseits eine zweite Kette (25), die in sich als Schleife geschlossen und im Eingriff mit einem Zapfen (24) ist, der fest mit einem anderen Zapfen (18) im Eingriff mit der Kette (22) zur kontinuerlichen Bewegung der Antriebsorgane ist, und andererseits eine Platte (29) aufweisen, die mit der beweglichen Einrichtung (30) fest verbunden und mit Zapfen (26-28) im Eingriff mit der zweiten Kette (25) ausgerüstet ist, wobei der eine dieser Zapfen (26) kinematisch mit einem Motor (32) verbunden ist, der geeignet ist, entweder blockiert zu werden, in welchem Fall die zweite Kette (25) die Platte (29) und die bewegliche Einrichtung in der gleichen Richtung und mit der gleichen Geschwindigkeit wie die Kette (22) zur kontinuierlichen Bewegung der Antriebsorgane des Bandes (6) antreiben muß, oder in einer solchen Richtung und mit einer solchen Geschwindigkeit in Bewegung gesetzt zu werden, daß der Zapfen (26) die Platte (29) und die bewegliche Einrichtung (30) in Gegenrichtung der zweiten Kette (25) antreiben muß.

FIG.1

FIG.2

EP 0 219 379 B1

FIG.3

FIG.4

FIG.5

FIG.6

EP 0 219 379 B1